# EUROPEAN PATENT APPLICATION

(11) **EP 0 521 357 A2**
(43) Date of publication of application: **07.01.1993**
(21) Application number: 92110387.5
(22) Date of filing: 19.06.1992
(51) Int. Cl.: C05F 17/02

(54) **Machine to aerate compost in heaps**

(30) Priority: 04.07.1991 IT UD910107
(71) Applicant: DANECO DANIELI ECOLOGIA SpA, I-33100 Udine (IT)
(72) Inventor: Castelli, Luigi, I-34100 Trieste (IT)
(74) Representative: Petraz, Gilberto Luigi

(57) **Abstract**

Machine to aerate compost in heaps positioned in the open air or in a shed, the dimensions of the width and length of the heaps being considerable, which machine comprises a gantry crane or bridge crane able to move along the length of the heaps and having its carrying beam arranged substantially normal to the lengthwise axis of the heap, the carrying beam supporting and displacing overturning means along its length, the overturning means being high-speed rotary drum means (17) bearing hammers (19) or knives on their periphery, the rotary drum means (17) having a substantially horizontal axis substantially parallel to the lengthwise axis of the heap (12) and being able to move parallel to the carrying beam (14).

## Description

This invention concerns a machine to aerate compost in heaps, as set forth in the main claim.

The aeration machine according to the invention can be applied advantageously, but not only, to the field of treatment of wastes and, in particular, to the handling of compost produced by biochemical decomposition or solid and sludgy wastes having mainly an organic content, the compost being employed as a fertilizer.

Plants for the recovery of energy and materials are having a great success, above all for environmental and economical reasons, among the various technologies used nowadays for the disposal of solid urban wastes besides controlled dumping and incineration.

Particularly in demand are composting plants which use a great fraction of the solid urban wastes, namely the fraction with a mainly organic content possibly mixed with sludges obtained by purifying waste waters, thus producing a product intended above all for use as a fertilizer in agriculture.

Moreover, there have been disclosures and trials of a different employment of compost with a view especially to the recovery and physical safeguarding of terrains (consolidation of slopes, grassing of the embankments of roads, etc.).

The parameters which characterize the quality of a compost for commercial purposes are:
- the content of organic substance and of humus in particular;
- the content of nutrient elements, especially nitrogen;
- the inclusion of undesirable materials such as glass, plastics, metallic parts,etc;
- the content of metals, metallic compounds and dangerous organic substances;
- hygienic properties;
- degree of maturing;
- degree of humidity;
- physical characteristics (piece size).

Compost is a fertilizer which is used on the ground in great quantities amounting to tens of thousands of kilos per hectare if it is to be effective.

Compost is sold in the raw state in bulk, especially for use over great areas, or in the form of granules or pellets.

Composting provides a relatively stable product.

To form and mature compost it is necessary to aerate the heap of wastes both so as to provide the oxygen needed by the aerobic micro-organisms, to remove the heat produced in the heap by the action of biological oxidation and thus to keep the temperature constant and also to ensure a homogeneous, constant humidity within the heap.

The degree of decomposition depends, in fact, on the temperature, the pH, the ratio of carbon to nitrogen, the size of the particles, the humidity, the aeration and the size and shape of the heap.

If a good quality compost is to be produced, it is necessary that the temperature should be kept as constant as possible between about 50°C and 70°C and that the humidity should be about 50-60%.

Various techniques for composting are known but all of them (except where organic wastes have been separated at the source) comprise a first step of preparing the wastes, during which the organic wastes are separated by hand or mechanically or with the use of yet other techniques and are crushed thereafter, since the smaller the sizes of the wastes undergoing the composting process are, the more efficient will be the action of decomposition.

This first step of the physical readying of the wastes is followed by a step of digestion of the wastes by the aerobic micro-organisms.

During this second step the wastes being oxidized may be turned over several times advantageously so as to keep the temperature and humidity as even and constant as possible and to supply with oxygen the aerobic micro-organisms which are at the basis of the oxidation.

In fact, the lack of oxygen would cause anaerobic oxidation of the wastes and would produce evil smells with all the unpleasant results due thereto.

Moreover, during these operations of overturning the heaps of compost it is also necessary to apply a given crushing and separating action, since the material tends to form lumps with a resulting loss of efficiency of the oxidation.

We shall now give a brief general analysis of the various methods employed heretofore to oxidise wastes and, in particular, the various techniques used to overturn the heaps of treated wastes periodically.

In a first system the compost being formed is gathered in heaps which extend lengthwise, are positioned parallel and are separated so as to leave a corridor free for the passage of the means which overturns the heaps periodically.

This system includes a vehicle with two drive wheels positioned at its sides and separated by a distance such that the vehicle can run in the corridors at the sides of the heaps of developing compost to be overturned.

A transverse grinding roller is fitted to the lower part of the machine and has its axis substantially horizontal and orthogonal to the direction of movement of the machine. This grinding roller consists substantially of a cylinder bearing a plurality of teeth or hammers hinged on its outer surface and is actuated during the movement of the machine along the heap of compost.

During the movement of the machine along the heap of compost this grinding roller cooperates with the compost itself and overturns it and breaks up the lumps which tend to form within the heap.

This system gives good results as regards the crushing and aeration of the compost but cannot moisten the compost, since such moistening would require the installation of a huge tank of water on the machine itself.

Furthermore, this system entails the use of great spaces, which are not always available and are also increased by the inclusion of corridors between one heap and another to enable the wheels of the machine to pass.

Another system is applied to compost held in lengthwise channels separated by dividing sidewalls, over which are runways on which an overturning device is supported and runs. In this case the aeration of the compost can be ensured also by blowers positioned on the bottom of the channels or below along the dividing sidewalls of the channels.

The machine in this case consists of an overhead trolley running on runways, below which is installed a conveyor, for instance, a sloping conveyor belt which cooperates at its lower end part with a rotary drum equipped with a plurality of projections.

During working the trolley runs on the lengthwise runways from one end of the channel to the other, and the rotary drum by means of the projections on its surface loads the compost onto the conveyor, which raises the compost and deposits it downstream of the machine, thus displacing the whole heap backwards in relation to the direction of forward movement of the trolley.

But in this way only the aeration of the compost is accomplished, whereas the crushing and moistening operations cannot be fulfilled.

Besides, this system requires heavy investments precisely because of the necessary structures such as the channels and the runways able to support the trolley.

Another system includes an aeration machine consisting of a rotary drum positioned on the front of a machine which attacks the heap of compost. This rotary drum feeds a worm, which in turn feeds a conveyor belt capable of being oriented sideways or even directly at the shoulders of the advancing machine.

During the working step this aeration machine removes the heap by digging into it and forms a new heap on the right or left or directly at the shoulders of the advancing machine. Lumps in the heap are crushed and all the compost is turned over and aerated.

Moreover, this aeration machine is equipped with a water atomiser, which atomises the water at the front of the machine onto the compost, thus enabling heaps of compost to be moistened homogeneously.

The feed of water to the atomiser is delivered by a hose which is wound by electrical control onto a winding drum.

This method provides aeration and moistening of the compost, but the equipment is unable to carry out a real crushing of the material.

Another system delivers the compost into a circular digester with a perforated bottom, through which air is blown to ensure that oxidation takes place in an aerobic manner.

Aeration of the compost is ensured by a plurality of cutters having a substantially vertical axis and arranged below a horizontal arm, which can rotate by 360° and is fitted above the circular digester. These rotary cutters mix the material being oxidized in the digester continuously.

In general, the material introduced at the middle of the digester is discharged at the periphery. But this system entails the drawback of requiring high installation and working costs.

The worm/wheel system includes a wheel equipped with vanes with a substantially horizontal axis and able to rotate about an inner worm used to move and discharge the compost from the trench of the digester.

During working the wheel is displaced lengthwise along the trench containing the compost and lifts and loads the compost.

The rotation of the wheel with vanes has the effect that the compost is fed to the worm continuously and is discharged into a lateral trench next to the trench being emptied.

But with this method too the overturned compost undergoes only a limited crushing action at very high costs.

In the most widespread state of the art today the compost is stored in heaps having a width up to 30-40 metres and a great length; the heaps are separated by lanes suitable for the running of the means which handle, load and unload the compost. These heaps are placed advantageously, but not necessarily, within sheds; in this way, while an initial segment of the heap is being despatched, another segment is maturing and an intermediate segment is empty.

Various machines for overturning, aerating and handling the compost thus gathered have been disclosed.

A first type of machine consists of a gantry system which moves along and above the heap of compost to be aerated. This gantry system includes an upper positionable system on which is fitted a mixing worm with a vertical axis; the worm moves perpendicularly to the forward movement of the gantry. This type of machine can be combined readily with a moistening and distributing system.

The main problems with a machine of this type are the facts that no crushing of the compost is carried out and that the periods required for treating the compost are very long.

In another system the compost is held in rectangular vessels and is overturned by a traversing bridge to which are fitted vertical worms that exert a mechanical action on the underlying compost. The system includes a bridge crane or gantry crane with a worm cutter.

The present applicants have designed, tested and embodied the following invention to overcome the shortcomings of the state of the art and to achieve further advantages.

This invention is set forth and characterized in the main claim, while the secondary claims describe variants of the idea of the main embodiment.

The aeration machine according to the invention is applied to heaps of compost arranged in a continuous or non-continuous carpet with a width between about 10 and 40 metres, a length between about 30 and 300 metres and a height of up to three metres or more.

In view of their dimensions the whole of these heaps of compost does not simultaneously reach the same stage of maturing and the carpet of compost has its width divided by a strip without compost; this strip moves over a period of time and divides new compost from the mature compost and the compost being despatched.

The aeration machine according to the invention is applied to heaps of compost located in the open air or in a shed.

The aeration machine according to the invention consists substantially of a gantry crane or bridge crane having a length slightly greater than the width of the heap of compost to be turned over and having its carrying beam positioned above the heap of compost in a position normal to the length of the heap.

The bridge crane or gantry crane is equipped with independent drive means, which are actuated discontinuously to make the crane pass along the heap to be overturned after each overturning step.

During working the bridge crane or gantry crane is halted over a transverse strip of the heap of compost to be overturned by the aeration machine according to the invention.

A movable trolley is positioned on the carrying beam of the bridge crane or gantry crane and can run therealong, being driven by a suitable motor; a support to which a cutter is fitted is connected solidly from below to the trolley. The cutter advantageously has a substantially horizontal axis.

The cutter advantageously has only one axis, which is substantially parallel to the lengthwise axis of the heap.

According to a variant a thrust drum is fitted to the same support or to the movable trolley above and in front of the cutter and thrusts the material of the heap towards the cutter below.

The cutter consists of a high-speed rotary drum and can move parallel to the carrying beam of the bridge crane or gantry crane and orthogonally to the runway of the bridge crane or gantry crane.

The rotary drum bears on its outer surface a plurality of hammers or knives or like means, which have the effect that the rotary drum acts like a real mill, thus performing also the task of crushing and shredding the masses of compost besides aerating and overturning those masses.

According to a variant the rotary drum is fitted on a positioning means which positions the drum vertically so that the latter can work also on specific layers of the heap to be turned over.

According to another variant a device to distribute water is fitted to the bridge crane or gantry crane and enables the compost to be moistened by means of nozzles or other sprayer means, which may possibly be combined with the rotary drum; this moistening may take place upstream, downstream or during the cutting step, depending on where the nozzles are positioned.

With the aeration machine according to the invention the overturning of the heaps of compost takes place as follows:
- the bridge crane or gantry crane is positioned above the strip of the heap to be overturned;
- the rotary drum is positioned at the right height in relation to the heap of compost to be turned over and is set in rotation;
- the cutter-bearing trolley is moved from one side to the other of the heap in a direction orthogonal to the runways of the bridge crane or gantry crane and the compost is accordingly turned over;
- when the overturning and crushing of the compost forming that strip of the heap has taken place, the cutter is halted and the bridge crane or gantry crane is traversed to the new strip of compost to be overturned by a distance equal to or slightly less than the length of the cutter and is then halted;
- the cutter is thus located in front of a new strip of compost to be turned over, and the last three above operations can be repeated until the whole heap has been turned over, but the cutter is caused to move in an inverted direction.

If instead a thrust drum is also included, the cutter will move advantageously always in one direction.

As said above, during the step of overturning the compost the means to spray water may be actuated to obtain moistening of the compost until a required constant, homogeneous degree of humidity is reached.

Moreover, the aeration machine according to the invention can be combined with a system for automatic parking by means of belt conveyors of a known type.

It is also possible to employ a system of a known type to enable the bridge crane or gantry crane to be moved to another heap.

The aeration machine according to the invention accomplishes not only the movement and moistening of the compost but also the crushing and shredding of the lumps of compost which tend to form and which hinder the maturing of the compost and worsen the quality of the compost produced.

Furthermore, the aeration machine according to the invention provides a high working capacity with an excellent and rational employment of the space occupied.

The attached figures are given as a non-restrictive example and show a preferred embodiment of the invention as follows:

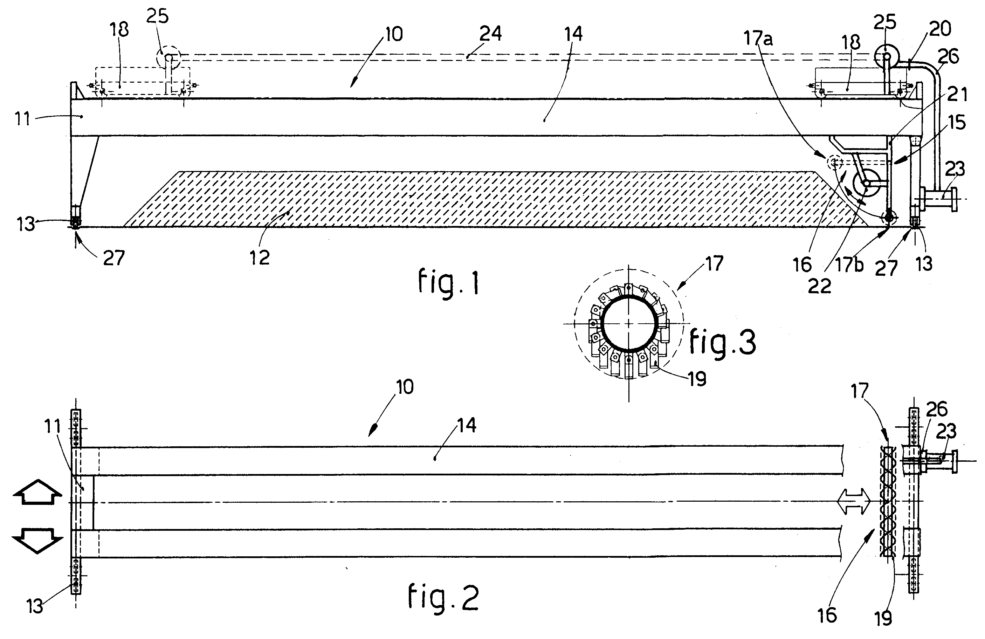

- Fig.1: is a front view of the aeration machine according to the invention;
- Fig.2: is a plan view of the aeration machine of Fig.1;
- Fig.3: shows in an enlarged scale a crosswise view of the rotary drum.

In the figures the reference number 10 indicates generally an aeration machine according to the invention. In this example the aeration machine 10 consists of a bridge crane or gantry crane 11 which is traversed along and above a heap 12 of compost.

The bridge crane or gantry crane 11 is installed on a plurality of wheels 13 which run in lateral guides 27 positioned parallel to the heap 12.

A trolley 18 is traversed on a carrying beam 14 of the bridge crane or gantry crane 11 and is driven by a suitable motor of a known type, which is not shown here; a support 21 is fitted to and below the trolley 18.

A device 15 to displace and position a cutter 16 employed to overturn the heap 12 is installed on the support 21.

In this example the cutter 16 consists of a rotary drum 17 mounted on the terminal part of the displacement and positioning device 15 and having a high inactive and possibly retracted position 17a and a lowered working position 17b.

The rotary drum 17 in its high inactive and possibly retracted position 17a is placed above the heap 12 but in its lower working position 17b cooperates directly with the heap 12 of compost, thus overturning the heap 12 and crushing any lumps of compost which tend to form in the heap 12.

The rotary drum 17 bears advantageously on its outer surface a plurality of hammers 19 arranged in a double spiral in this example.

In this case a thrust drum 22 is fitted to the support 21 above and in front of the cutter 16 and, during the movement of the trolley 18, thrusts the material of the heap 12 towards the rotary drum 17 of the cutter 16 located below.

According to a variant the aeration machine 10 is equipped with a plant to spread water to moisten the heap 12 of compost. In this case the water spreading plant comprises a water tank 23 fitted laterally on the bridge crane or gantry crane 11, a connecting pipe 26 and winding drum 25 on which a hose 24 in wound and unwound.

The hose 24 is equipped with an attachment 20 at one of its ends for connection to the connecting pipe 26 and is coupled at its other end to a spraying plant of a known type, which is not shown here.

The bridge crane or gantry crane 11 with the trolley 18 positioned laterally is located above the heap 12 of compost and over the strip to be turned over.

The displacement and positioning device 15 is lowered to bring the cutter 16 to the required position and thereafter the rotary drum 17 is actuated.

The trolley 18 is now moved across the heap 12 of compost and makes the rotary drum 17 cooperate with the strip of the heap 12 of compost which the rotary drum 17 encounters during its travel.

In this way the compost is aerated, turned over and shredded by the hammers 19 arranged on the rotary drum 17.

## Claims

1. Machine to aerate compost in heaps positioned in the open air or in a shed, the dimensions of the width and length of the heaps being considerable, which machine comprises a gantry crane or bridge crane able to move along the length of the heaps and having its carrying beam arranged substantially normal to the lengthwise axis of the heap, the carrying beam supporting and displacing overturning means along its length, the machine being characterized in that the overturning means are high-speed rotary drum means (17) bearing hammers (19) or knives on their periphery, the rotary drum means (17) having a substantially horizontal axis substantially parallel to the lengthwise axis of the heap (12) and being able to move parallel to the carrying beam (14).

2. Aeration machine as claimed in Claim 1, in which a thrust drum (22) is included in front of and substantially above the rotary drum (17).

3. Aeration machine as claimed in Claim 1 or 2, in which the rotary drum (17) can be positioned vertically in relation to the the height of the heap (12).

4. Aeration machine as claimed in any claim hereinbefore, in which the rotary drum (17) has a working position (17b) and an inactive and possibly retracted position (17a).

5. Aeration machine as claimed in any claim hereinbefore, which is associated with means which moisten the compost.

6. Aeration machine as claimed in any claim hereinbefore, which is associated with automatic parking means.

7. Aeration machine as claimed in any claim hereinbefore, which is associated with a system able to displace the aeration machine (10) from one heap (12) to another.
